# EUROPEAN PATENT SPECIFICATION

(11) **EP 3 102 930 B1**
(45) Date of publication and mention of the grant of the patent: **15.01.2020**
(21) Application number: 15702375.5
(22) Date of filing: 03.02.2015
(51) Int. Cl.: G01N 23/207, G01N 23/20008

(54) **METHOD FOR X-RAY CRYSTALLOGRAPHY OF MICROCRYSTALS, IN PARTICULAR OF BIOLOGICAL MACROMOLECULES**
VERFAHREN FÜR RÖNTGENKRISTALLOGRAFIE VON MIKROKRISTALLEN, INSBESONDERE VON BIOLOGISCHER MAKROMOLEKÜLE
PROCÉDÉ POUR LA CRISTALLOGRAPHIE AUX RAYONS X DE MICROCRISTAUX, EN PARTICULIER AVEC DES MACROMOLÉCULES BIOLOGIQUES

(30) Priority: 04.02.2014 EP 14000403; 04.02.2014 US 201461935508 P
(43) Date of publication of application: 14.12.2016
(73) Proprietor: Max-Planck-Gesellschaft zur Förderung der Wissenschaften e.V., 80539 München (DE); Arizona Board of Regents acting for and on behalf of Arizona State University, Scottsdale, AZ 85257 (US)
(72) Inventor: DOAK, Robert Bruce, 69120 Heidelberg (DE); SHOEMAN, Robert, 68549 Ilvesheim (DE); BOTHA, Sabine, 22589 Hamburg (DE); SCHLICHTING, Ilme, 69115 Heidelberg (DE); BARENDS, Thomas R.M., 69124 Eppelheim (DE); NASS, Karol, 69123 Heidelberg (DE)
(74) Representative: v. Bezold & Partner Patentanwälte - PartG mbB
(86) International application number: PCT/EP2015/000208
(87) International publication number: WO 2015/117748

(56) References cited:
- US-A1- 2010 243 753
- US-A1- 2013 308 756
- LINDA C JOHANSSON ET AL: "Lipidic phase membrane protein serial femtosecond crystallography", NATURE METHODS, vol. 9, no. 3, 29 January 2012 (2012-01-29), pages 263-265, XP055110498, ISSN: 1548-7091, DOI: 10.1038/nmeth.1867
- SPENCE J C H ET AL: "Key Issues Reviews;X-ray lasers for structural and dynamic biology;X-ray lasers for structural and dynamic biology", REPORTS ON PROGRESS IN PHYSICS, INSTITUTE OF PHYSICS PUBLISHING, BRISTOL, GB, vol. 75, no. 10, 13 September 2012 (2012-09-13), page 102601, XP020229648, ISSN: 0034-4885, DOI: 10.1088/0034-4885/75/10/102601
- UWE WEIERSTALL ET AL: "Lipidic cubic phase injector facilitates membrane protein serial femtosecond crystallography", NATURE COMMUNICATIONS, vol. 5, no. 3309, 14 February 2014 (2014-02-14), pages 1-6, XP055174648, DOI: 10.1038/ncomms4309 & JOHN C. H. SPENCE: "Approaches to time-resolved diffraction using an XFEL", FARADAY DISCUSSIONS, vol. 171, 2014, - 25 March 2014 (2014-03-25), pages 429-438, XP055174960, ISSN: 1359-6640, DOI: 10.1039/C4FD00025K
- UWE WEIERSTALL ET AL: "Instrumentation at X-ray FELs and MX beamline for structural dynamic studies", ACTA CRYST. A, vol. A69, 28 August 2013 (2013-08-28), pages s140-s141, XP055110554, The 28th Meeting of the European Crystallographic Association 25-29 August 2013, Warwick, UK
- WEIERSTALL U ET AL: "Injector for scattering measurements on fully solvated biospecies", REVIEW OF SCIENTIFIC INSTRUMENTS, AIP, MELVILLE, NY, US, vol. 83, no. 3, 21 March 2012 (2012-03-21) , pages 35108-35108, XP012162180, ISSN: 0034-6748, DOI: 10.1063/1.3693040 [retrieved on 2012-03-21] cited in the application
- FROMME: "Femtosecond nanocrystallography using X-ray lasers for membrane protein structure determination", CURRENT OPINION IN STRUCTURAL BIOLOGY, vol. 21, no. 4, 11 July 2011 (2011-07-11), pages 509-516, XP055016401, ISSN: 0959-440X

## Description

### Field of the invention

The present invention relates to a method of X-ray crystallography for investigating microscopic crystals, in particular for investigating microscopic crystals of biological macromolecules (bio-microcrystals), like e. g. protein crystals. Furthermore, an injector nozzle device is described, which is adapted for creating a sample stream including the microscopic crystals for diffraction investigations. Furthermore, an X-ray crystallography apparatus is described, including the injector nozzle device. Applications of the invention are available in the field of diffraction measurements with crystal samples, in particular microscopic crystals of biological macromolecules.

### Technical background of the invention

In the present specification, reference is made to the following publications cited for illustrating prior art techniques, in particular conventional X-ray crystallography of bio-microcrystals.
[1] U. Weierstall et al. in "Exp. Fluids" vol. 44, 2008, p. 675 - 689;
[2] A. M. Gañán-Calvo in "Phys. Rev. Lett." vol. 80, 1998, p. 285 - 288;
[3] US 8 272 576;
[4] U. Weierstall et al. in "Rev. Sci. Instrum." vol. 83, 2012, 035108;
[5] S. Boutet et al. in "Science" vol. 337, 2012, 362-364;
[6] D. P. DePonte et al. in "J. Phys. D: Appl. Phys." vol. 41, 2008, p. 195505 - 195512;
[7] E. M. Landau and J. P. Rosenbusch, in "Proc. Nat. Acad. Sciences, USA", vol. 93, 1996, p. 14532 - 14535;
[8] L. C. Johansson et al. in "Nature Methods", vol. 9, 2012, pages 263-265;
[9] J. C. H. Spence et al. in "Reports on Progress in Physics", Institute of Physics Publishing, vol. 75, 2012, page 102601;
[10] U. Weierstall et al. in "Nature Communications", vol. 5, 2014, pages 1-6;
[11] J. C. H. Spence et al. in "Faraday Discussions", vol. 171, 2014, pages 429-438; and
[12] US 2010/243753 A1.

X-ray crystallography is used for investigating the atomic or molecular structure of a sample by irradiating the sample with X-rays and measuring a pattern of diffraction intensities (diffraction image). Diffraction image data (angles and intensities of diffracted beams) allow a reconstruction of the three-dimensional distribution of electron density and atom positions within the sample. Various types of X-ray sources are available for diffraction measurements, including e.g. conventional X-ray tubes, synchrotron sources or X-ray free-electron laser (FEL) sources. Due to their superior spectral and geometric properties and high brilliance, the synchrotron and FEL sources are preferred today, in particular for investigating bio-microcrystals. The two sources differ in terms of their operating conditions. The synchrotron source is typically operated in a quasi-continuous mode. Time-resolved measurements typically rely on a pulsed mode that produces X-ray pulses of down to 100 ps duration. The FEL source creates X-ray pulses having a much shorter duration of about 3 fs to 500 fs.

In present practice, most structure determination of biological macromolecules is carried out via crystallographic diffraction measurements using synchrotron sources. The high quality crystals needed for such studies can often be grown only to microscopic size. Both to position the crystals in the synchrotron X-ray beam and to mitigate radiation damage caused by X-ray exposure, the conventional practice is to work with cryo-cooled samples arranged in a support loop. Even with cryogenic temperature, however, the resistance of biological samples to X-ray damage is still limited and very often limiting. Particularly in the case of very small crystals a new sample must be mounted, manually or robotically, at regular intervals to collect a complete dataset.

FEL X-ray sources are an alternative route to the analysis of radiation sensitive samples. Since the diffraction intensities of microcrystals are weak, data collection at FEL sources is typically performed in vacuum. The high intensity and short pulse duration of X-ray FELs allow the acquisition of diffraction intensities of very small crystals before the onset of significant radiation damage. Since the samples are destroyed upon exposure, it has been proposed to increase the speed and efficiency of data collection by continuously supplying the sample via a liquid jet of microscopic diameter (micro-jet) flowing into a vacuum environment. For example, creating a liquid jet, which breaks into a linear stream of droplets, has been described e. g. in [1]. However, the droplets may have a diameter which is too large for X-ray diffraction measurements. Smaller droplets have been obtained with a so-called gas dynamic nozzle (or: gas dynamic virtual nozzle, GDVN), as described in [2], [3] and [4]. However, the GDVN injection technique may have disadvantages in terms of a large flow rate, often 10 µl/min or greater, resulting in an excessive substance consumption that makes measurements difficult or impossible if the available volume of a biological sample to be investigated comprises some µl only.

Serial femtosecond crystallography of protein crystals using an FEL source has been demonstrated e.g. in [5], wherein the samples are provided in a liquid jet with GDVN technique according to [6]. Although the protein crystals in the liquid jet were destroyed by the intense X-ray pulses from the FEL source, high resolution diffraction images were nonetheless recorded. Useful diffraction intensities were obtained by merging the partial intensities derived from many diffraction images collected of a large number of protein crystals (about 1.5 million individual exposures). These intensities have been found to be in good agreement with diffraction data collected of stationary protein crystals mounted in capillaries and irradiated with a synchrotron source.

However, conventional serial femtosecond crystallography has experimental limitations in terms of the short pulse durations and performing the experiment in a vacuum environment. Furthermore, there are only two FEL sources available worldwide. Compared with the synchrotron measurements, the short pulse durations require adaptations on the detector side and vacuum complicates the experiments. Moreover, the mother-liquor containing the microcrystals or the microcrystals themselves can be unintentionally changed by the effect of vacuum e.g. through evaporative cooling and dehydration of the microcrystal solution.

Further X-ray diffraction measurements which are conducted with FEL-based X-ray sources are described in [8] to [12].

### Objective of the invention

The objective of the invention is to provide an improved method of X-ray crystallography, in particular for investigating samples of biological macromolecules, which is capable of avoiding disadvantages and limitations of current conventional techniques. In particular, specific objectives of the invention are to provide an improved method of serial X-ray crystallography having a very fast and efficient sample turnover, to allow measurements under natural environmental conditions, in particular for biological macromolecules, and/or to minimize X-ray damage to the samples.

### Summary of the invention

The above objective is solved with a method of X-ray crystallography comprising the features of claim 1. Advantageous embodiments and applications of the invention are defined in the dependent claims.

According to a general aspect of the invention, the above objective is solved by a method of X-ray crystallography for investigating microscopic crystals, in particular microscopic crystals of biological macromolecules, wherein the microscopic crystals are provided for an irradiation with an X-ray beam from an X-ray source device by extruding a sample stream with an injector nozzle device. According to the invention, the sample stream in particular comprises a viscous liquid (carrier material) with the microscopic crystals embedded therein. The sample stream includes a series of the microscopic crystals, which are moved through the X-ray beam by the extrusion with the injector nozzle device. Furthermore, according to the invention, the X-ray source device comprises a synchrotron source device. The sample stream is irradiated with the X-ray beam emitted by the synchrotron source device. Furthermore, according to the invention, diffraction image data are created by diffraction of the X-ray beam by the microscopic crystals with a series of X-ray exposures of the sample stream. The diffraction image data are collected for obtaining structural information on the microscopic crystals. The injector nozzle device and the synchrotron source device are controlled such that single X-ray exposures are obtained for subsequent microscopic crystals in a serial (sequential) fashion and associated diffraction images can be integrated into a data set. Due to a randomized orientation of the microscopic crystals in the sample stream, diffraction image data for a complete characterization of the microcrystals can be collected.

Advantageously, disadvantages of conventional techniques are avoided by extruding rather than flowing the sample stream since the sample stream thereby can be supplied with reduced velocity compared to conventional microjet nozzles. Furthermore, high-throughput serial single shot diffraction measurements at room temperature of microcrystals using a synchrotron source are provided for the first time. Sample supply by extrusion in combination with use of the synchrotron source device resolves the limitations imposed by conventional FEL sources. Furthermore, advantages of conventional procedures used with synchrotron based diffraction measurements, e. g. with regard to the rotation of the sample in the X-ray beam or the diffraction image data processing, can be combined with the advantages of the serial microcrystal supply. In addition, synchrotron sources are far more readily accessible than are FEL sources.

According to a preferred embodiment of the invention, the step of irradiating the sample stream is conducted at atmospheric normal pressure (1 atm). Preferably, the sample stream is extruded into an environment with normal pressure, e. g. into ambient air. As an important advantage of this embodiment, the arrangement and operation of the injector nozzle device is essentially facilitated and vacuum-induced modifications of the microcrystals are avoided.

Synchrotron crystallography is usually carried out in ambient air. Alternatively, the sample stream can be ejected into a closed environment including an inert gas, in particular helium. Usage of helium has advantages as the X-ray scattering cross-section of helium is less than that of air and so produces less background in the X-ray diffraction pattern. Helium is inert and also has a higher thermal conductivity than air. With a further advantageous variant, the invention allows irradiating the sample stream in an environment which is controlled such that solvent loss from the sample stream is avoided. Preferably, the injector nozzle device can be operated in a closed environment with humidity control to avoid dehydration of the sample stream.

According to a further preferred embodiment of the invention, the step of irradiating the sample stream is conducted at ambient temperature. Limitations of conventional cooling of stationary samples are avoided, and the microcrystals can be investigated with natural conditions thereof.

According to further preferred embodiments of the invention, the sample stream flows smoothly and continuously as a contiguous linear free-stream over a distance of no less than 100 µm downstream of the injector nozzle device and with a diameter of no more than 50 µm, and preferably no more than 20 µm.

As an important advantage of the invention, the sample stream can be extruded with a velocity lower than the flow velocity in a gas dynamic virtual nozzle (GDVN). Preferably, the velocity of the sample stream is such that a transit time of the microscopic crystals through the X-ray beam of the synchrotron is at least 1 ms, in particular at least 10 ms, and/or at most 10 s, in particular at most 1 s, wherein the X-ray beam intersecting the sample stream typically has a transverse linear dimension (e. g. diameter) of typically 20 to 50 µm. Accordingly, the velocity of the sample stream preferably is below 50 mm/s, in particular below 500 µm/s.

According to the invention, the sample stream including the microcrystals is a viscous liquid (high viscosity liquid). Preferably, the viscosity of the sample stream, in particular at 25 °C, is selected such that the sample stream extrudes as a semi-solid free-stream with shape stability from the injector nozzle device. The viscosity of the sample stream can be adjusted by selecting a composition and/or temperature of the carrier material. Accordingly, the viscosity of the sample stream preferably is above 10 Pa·s, in particular above 100 Pa·s. With preferred examples, the viscous liquid comprises lipidic cubic phase (LCP) or a carboxymethyl celullose suspension, or other biocompatible suspension, e. g. petroleum jelly (in particular Vaseline, commercial name), gels (in particular MeBiol gels, commercial name), silicone oils or their mixtures, in particular having high molecular weight and low molality. The lipidic cubic phase is provided as described e. g. in [7]. The temperature may be adjusted with a temperature control device thermally coupled with the injector body.

According to a further preferred embodiment of the invention, the concentration of the microcrystals in the sample stream is such that there is on average no more than one single microcrystal within the X-ray beam at any time. In other words, the concentration of microcrystals in the viscous liquid is set so that essentially only one single microcrystal is in the X-ray beam for each X-ray exposure. This microcrystal has an un-specified orientation, which however can be determined from the diffraction pattern that it produces ("indexing" the diffraction pattern).

Generally, the invention can be applied with a broad range of samples, wherein the term "microcrystal" refers to a monocrystalline particle having a characteristic dimension, e.g. diameter or length, below 50 µm, in particular below 5 µm. Preferably, the microcrystals comprise biological macromolecules, in particular including soluble proteins, insoluble proteins, soluble protein complexes, and/or insoluble protein complexes. The microcrystals may comprise a composite, e. g of organic molecules and water. Preferably, the microcrystals are maintained in a fully solvated condition within the sample stream throughout the X-ray irradiation.

If the longest transverse spatial extent of the microcrystals once embedded in and moving with the extruded sample stream is selected sufficiently less than the diameter of the extruded sample stream, advantages for a smooth, continuous extrusion are obtained. Preferably, the longest extent of the microcrystals even is no larger than the radius of the sample stream.

As a further advantage of the invention, the diffraction measurement can be conducted with various types and/or operation conditions of the synchrotron source device. Preferably the synchrotron source device comprises a synchrotron ring source or an energy-recovering LINAC source. The X-ray beam preferably is either a monochromatic X-ray beam or polychromatic but narrow band X-ray beam also known as a pink X-ray beam. Furthermore, the X-ray beam may comprise continuous X-ray radiation (continuous operation of the synchrotron source device), or it may comprise X-ray pulses generated e. g. by a bunch operation mode or with a shutter device (pulsed operation of the synchrotron source device). Preferably, X-ray exposures have a repetition rate such that each X-ray exposure probes a pristine volume of sample that has not been altered by preceding X-ray irradiance. The repetition rate preferably is above 1 Hz, in particular above 10 Hz.

According to the invention, diffraction image data are created by X-ray diffraction with the microscopic crystals with a series of X-ray exposures of the sample stream. Advantageously, there are multiple variants of providing the X-ray exposures. Firstly, with the pulsed operation, each X-ray exposure is determined by the X-ray pulse length (bunch length) or by open intervals of an X-ray shutter. Secondly, with the continuous operation, the X-ray exposure is determined by a shutter or detector gating, i. e. by activating a detector device for collecting the diffraction image data.

Preferably, the X-ray exposures have a duration (exposure time) that is longer than 100 ps, in particular longer than 10 ms. With investigation of bio-microcrystals, an exposure time is preferably selected such that the absorbed dose and the rate at which this dose is absorbed are below radiation damage conditions of the microcrystals.

According to the invention, the sample stream and the X-ray beam intersect each other at right angles. The axis of the sample free-stream is orthogonal to the axis of the X-ray beam. According to the invention, the sample stream is rotated about the axis thereof during each X-ray exposure. It is known from conventional techniques, that a small amount of rotation is beneficial, specifically if it is about the axis perpendicular to the axis of the X-ray beam. The rotation is provided for sweeping the Ewald sphere describing the kinematics of crystal diffraction through the lattice points in reciprocal space and so to integrate across the full angular width of the Bragg reflections (diffraction spots). Essentially this slight rotation covers a larger fraction of reciprocal space and thus volume of the Bragg reflection. It is an advantageous feature of the invention, that the rotation can be implemented even with the extruded sample stream, in particular by rotating the injector nozzle device.

Rotating the sample stream means a rotation not appreciably larger than the intrinsic angular width subtended by a diffraction channel. This angular width is typically a few tenths of one degree. Preferably, the sample stream is rotated by rotating the injector nozzle device, in particular at least 0.05°, but no more than 1° during each X-ray exposure. The rotation preferably comprises a periodic, step-wise rotation by the above angle with alternating rotation directions.

Furthermore, an injector nozzle device is described, which is arranged for extruding a sample stream into an environment at ambient pressure, wherein the sample stream comprises a viscous liquid with microscopic crystals embedded therein. The injector nozzle device has an injector body which includes a reservoir bore, a nozzle capillary, a hydraulic pressure drive and a sheath gas flow channel. The reservoir bore accommodates the viscous liquid with the microscopic crystals. The nozzle capillary has a proximal end coupled with the reservoir bore and a distal end opening to the environment at ambient pressure and being arranged for ejecting the viscous liquid with the microscopic crystals as a linear sample stream. The hydraulic pressure drive is arranged for applying a hydraulic pressure to the reservoir bore, and the sheath gas flow channel is arranged for providing a sheath gas flow coaxially surrounding the distal end of the nozzle capillary and the sample stream after being ejected from the nozzle capillary. Optionally, the complete injector body is made of three body sections and one nozzle assembly insert at a distal end of the injector body, which are connected via threaded connections, thus allowing a compact structure of the injector nozzle device.

Optionally, the hydraulic pressure drive has two pressure stages including a primary plunger and a secondary plunger. The primary plunger is in fluid communication with a pressurization system and in mechanical communication with the secondary plunger, and the secondary plunger includes a filler plug which is in fluid communication with the reservoir bore. The primary and secondary plungers are configured for creating a pressure transmission from the pressurization system to the reservoir bore with a pressure transmission ratio of at least 5.

Optionally, the injector nozzle device has at least one of the following features. If primary plunger and/or the piston rod of the secondary plunger is made of a tight-tolerance precision ground rod of hardened steel, in particular if the piston rod is a drill blank, a continuous, step-free pressure transmission can be improved. If the piston rod and the filler plug are mounted by differential thermal contraction, the injector nozzle device can be configured with a more compact design compared with conventional nozzles.

Optionally, the injector body includes a gas supply cavity carrying sheath gas to the sheath gas flow channel. The gas supply cavity is integrated in the injector body, thus further providing a compact structure of the injector nozzle device.

The injector nozzle device allows the extrusion of the sample stream with low and constant velocity of the desired value. The flow of high viscosity material through the injector can be subject to "stick-slip"-behaviour at the inner wall of the nozzle capillary through which it is extruded. With the compact design of the injector nozzle device components, in particular by minimizing the length of the nozzle capillary, the stick-slip behaviour minimized or even eliminated.

According to a further modification, the injector body includes a side fill-port being arranged for supplying the viscous liquid with the microcrystals to the reservoir bore. This allows as re-fill of the injector nozzle device without disassembly.

Optionally, the compact design of the injector nozzle device can be further improved if hydraulic and gas supply lines are directly welded or hard-soldered to the injector body. The hydraulic and gas supply lines are connected for applying a hydraulic pressure to the primary plunger and for supplying the sheath gas, resp..

According to further modification, the injector nozzle device is adapted for an attachment to a goniometer head by a screw connection or magnetic forces. The injector body or at least a proximal section thereof allows a magnetic attachment to the goniometer head. Accordingly, the injector nozzle device can be arranged at the goniometer head as it is known from conventional magnetic loop holders. It is even possible to adapt an available diffraction apparatus simply by replacing the magnetic loop holder by the injector nozzle device.

Furthermore, a temperature control device can be provided which is thermally coupled with the injector body. Advantageously, the temperature control device allows an adjustment of the viscosity of the sample stream. A loop control can be implemented wherein the viscosity of the sample stream is adjusted with the temperature control device in dependency on an optical image of the sample stream collected with an optical monitoring device. The temperature and viscosity are adjusted such that a straight sample stream is formed.

According to a further modification, a sealed sliding connection is provided between the sheath gas flow channel and the nozzle capillary. The sliding connection, which preferably is O-ring sealed, facilitates a precise positioning along the injector axis of the capillary tip relative to the sheath gas flow channel, said adjustment being even possible with the injector fully assembled and including during actual operation, either by manual adjustment or by remote adjustment via appropriate motorization. In particular, the remote adjustment can be operated via remote control during actual use, using a feedback loop including the optical monitoring device.

Furthermore, an inner shape of the sheath gas flow channel, e. g. at an opening thereof, preferably differs from an outer shape of the nozzle capillary, e. g. at the distal end thereof. This allows a direct contact of the nozzle capillary with the sheath gas flow channel for centring the nozzle capillary, while keeping space for the flowing gas. With preferred examples, the distal end can have e. g. a cylindrical or cone shape, and the sheath gas flow channel opening can have an inner square shape, or the distal end can have a shape formed by polygonal facets and the sheath gas flow channel opening can have an inner circular shape.

Furthermore, an X-ray crystallography apparatus is described, being configured for X-ray crystallography investigations of microscopic crystals, in particular microscopic crystals of biological macromolecules, comprising the injector nozzle device, a synchrotron source device for supplying an X-ray beam and irradiating the sample stream with the X-ray beam, and a detector device for collecting diffraction image data created by diffraction of the X-ray beam with a series of X-ray exposures of the sample stream.

According to a first variant of the X-ray crystallography apparatus, the injector nozzle device is arranged for ejecting the viscous liquid horizontally. An axial direction of the injector nozzle device, in particular of the nozzle capillary thereof is horizontally oriented. With a horizontal beam direction of the synchrotron source device, in particular of the beam line section thereof, both the axial direction of the injector nozzle device and the beam direction of the synchrotron source device span a horizontal plane. This variant can have advantages in terms of arranging and adjusting the goniometer head.

According to a second, alternative variant of the X-ray crystallography apparatus, the injector nozzle device is arranged for ejecting the viscous liquid vertically downward (along the gravitational direction). With this variant, the axial direction of the injector nozzle device, in particular of the nozzle capillary thereof is vertically oriented, with a downward opening of the nozzle capillary. With the horizontal beam direction of the synchrotron source device, in particular of the beam line section thereof, both the axial direction of the injector nozzle device and the beam direction of the synchrotron source device span a vertical plane. The vertical mount of the injector nozzle device injector nozzle device has the advantage that gravity provides additional stability to the vertically extruding sample stream. Furthermore, the vertical orientation keeps the sample stream from curling up or balling up as it leaves the injector nozzle.

The advantageous success of the inventive diffraction measurement is supported in particular by the low speed of the extruded free-stream and its high viscosity. It was unknown, prior to the practical demonstration by the inventors, whether serial snapshot data could be recorded at a synchrotron with sufficiently high quality and quantity to allow extraction of a biomolecular structure. The inventors demonstrated the seminal feasibility of both the inventive apparatus and methodology in particular for room temperature biological structure determination e. g. at up to 10 Hz shutterless serial synchrotron X-ray diffraction from randomly oriented biological microcrystals carried in a flowing microscopic stream. Imminent technological improvements, in particular modern detectors and microfocused "pink" X-ray beams, will not only increase the speed of the data collection by over an order of magnitude, but also allow data collection from significantly smaller crystals.

Analysis of a very large number of diffraction snapshots from randomly oriented microcrystals, e. g. protein microcrystals, as intrinsic to the inventive method, is somewhat more involved than conventional diffraction analysis on oriented crystals. However compared with the techniques developed at FEL sources, where serial snapshot data collection is mandatory due to the destructive nature of the exposure, the complexity in data analysis of serial snapshots is easily compensated by the experimental benefits of analyzing microcrystals, rapid sample replenishment, room temperature operation, full utilization of the unattenuated X-ray beam, and very efficient use of sample. With these advantages, and given the large number of synchrotron beamlines available worldwide, this method has broad applications in the widely used technique for biological structure determination.

### Brief description of the drawings

Further details and advantages of the invention are described in the following with reference to the attached drawings, which show in:
- Figure 1:: a schematic illustration of a method of X-ray crystallography according to a preferred embodiment of the invention using an X-ray crystallography apparatus with horizontal sample stream direction;
- Figure 2:: a cross-sectional illustration of the arrangement of an injector nozzle device in the X-ray crystallography apparatus of Figure 1;
- Figure 3:: a cross-sectional view of an injector nozzle device;
- Figure 4:: a side-view of the injector nozzle device of Figure 3;
- Figure 5:: details of a tip of the injector nozzle device of Figure 3;
- Figure 6:: a schematic illustration of an alternative X-ray crystallography apparatus with vertical sample stream direction; and
- Figure 7:: exemplary diffraction images obtained with the X-ray crystallography apparatus of the invention.

### Preferred embodiments of the invention

Preferred embodiments of the invention are described in the following with exemplary reference to the serial X-ray crystallography investigation of lysozyme microcrystals carried in a lipidic cubic phase, wherein operational parameters of the injector nozzle device are selected in dependency on the particular measuring conditions, like e.g. the X-ray exposure time, the photon flux, the focal size, the concentration of the microcrystals in the LCP and the LCP viscosity. It is emphasized that the implementation of the invention is not restricted to the described example, but rather possible with microcrystals of other molecules, included in LCP or other high-viscosity media and investigated using other measuring conditions. In particular, irradiating the sample stream and collecting the diffraction images can be done in vacuum or an inert gas atmosphere, like e.g. helium, rather than at ambient air pressure.

The X-ray source device used for creating X-ray pulses is a synchrotron source device, like e.g. the Swiss Light Source (SLS) synchrotron (Paul Scherrer Institute, Villigen, Switzerland). Details of operating the synchrotrons source device are not described as far as they are known from conventional synchrotrons. The implementation of the invention is not restricted to the SLS but rather possible with other synchrotron source devices of the second or third generation. Details of processing diffraction image data are not described as they are from conventional methods, In particular, the evaluation of the diffraction image data and calculation of microcrystal structure information based on serially collected microcrystals can be implemented as it is known from conventional FEL-based diffraction investigations.

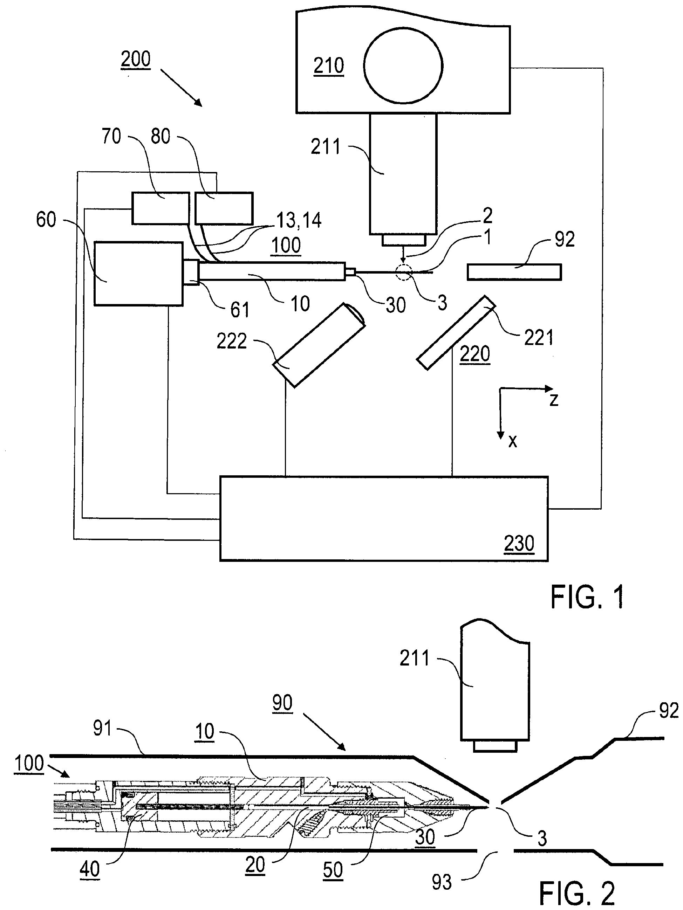

According to Figures 1 and 2, an X-ray crystallography apparatus 200 comprises an injector nozzle device 100, a synchrotron source device 210, a detector device 220 and a control device 230. The injector nozzle device 100 is arranged for creating a linear sample stream 1 traveling along a longitudinal, axial direction of the injector nozzle device 100 (z-direction).

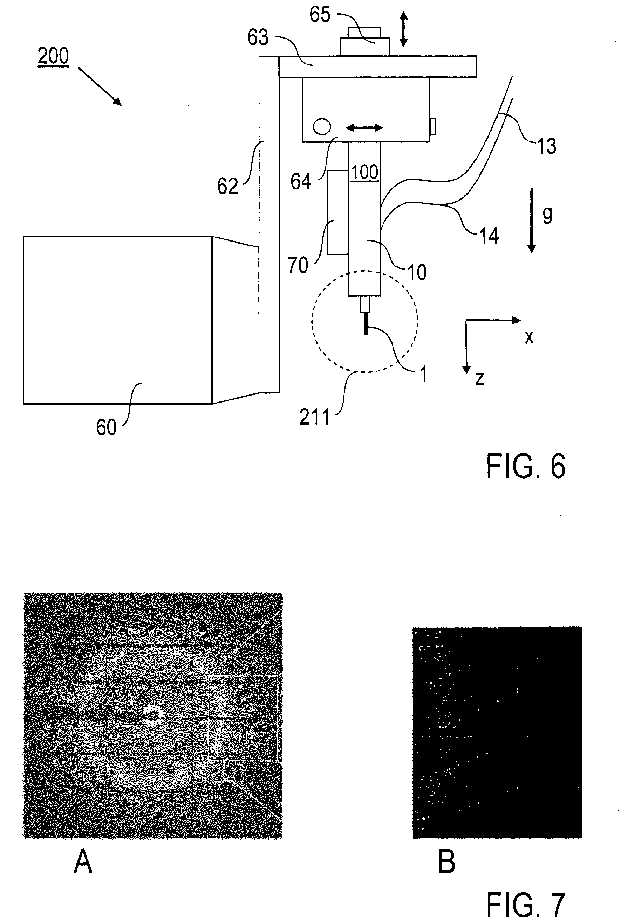

The synchrotron source device 210 (partially shown) includes a beam line section 211 with an exit window, where an X-ray beam 2 is supplied. The X-ray beam 2 travels along a beam axis of the beam line section 211 (x-direction). With the illustrated example, the direction of the sample stream 1 is perpendicular to the direction of the X-ray beam 2, wherein the x- and z-directions span a horizontal plane. Alternatively, the direction of the sample stream 1 and the direction of the X-ray beam 2 span a vertical plane (see Figure 6). The sample stream 1 and the X-ray beam 2 intersect each other at an interaction area 3. The injector nozzle device 100 and the beam line section 211 are arranged such that the interaction area 3 is just in front of the exit window of the beam line section 211. With a preferred example, the distance between the exit window and the sample stream 1 is about 5 cm.

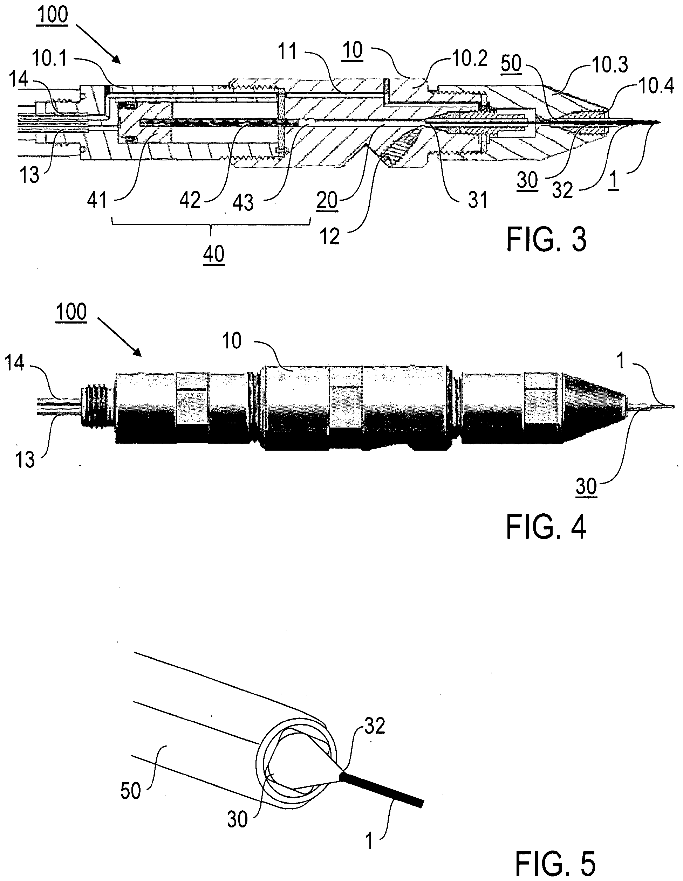

The injector nozzle device 100 comprises an injector body 10, a reservoir bore 20, a nozzle capillary 30, a hydraulic pressure drive 40 and a sheath gas flow channel 50, which are described with reference to Figure 3 below. The injector nozzle device 100 is supported by a goniometer head 60, e. g. the PXII goniometer of the SLS, including a rotation stage (not shown) and a goniometer attachment mount 61. The injector body 10 and/or the goniometer attachment mount 61 include a permanent magnet or a screw connection (see Figure 3), and the injector body 10 is removably attached to the goniometer attachment mount 61. Using the goniometer head 60, the longitudinal axis of the injector nozzle device 100 and the direction of the sample stream 1 can be adjusted relative to the beam axis of the beam line section 211. The rotation stage of the goniometer head 60 is configured for a periodically reversing rotation of the injector nozzle device 100 about the longitudinal axis (z-axis) thereof, e.g. through 0.2° during the X-ray exposures.

Alternatively, the goniometer mount can be directly incorporated into the base of the injector body 10, and/or the supply tubes for gas and hydraulic liquid can be installed perpendicular rather than parallel to the injector axis. Advantageously, this would result in a much shorter configuration of the injector nozzle device, thus facilitating the combination with an existing synchrotron source.

The injector nozzle device 100 is coupled with a pressurisation system 70, which is arranged for applying hydraulic pressure to the hydraulic pressure drive 40. The pressurisation system 70 comprises e.g. a HPLC pump providing a hydraulic pressure (e. g. water pressure) of e. g. 41 MPa (6000 psi). Furthermore, the injector nozzle device 100 is coupled with a sheath gas supply 80 providing a sheath gas flow in the sheath gas flow channel 50. The sheath gas flow device 80 comprises e.g. a pressurised gas reservoir including e. g. air, nitrogen or helium.

Both of the pressurisation system 70 and the sheath gas supply 80 are connected via hydraulic and gas supply lines 13, 14 with the injector nozzle device 100. With an advantageous feature of the invention, the hydraulic and gas supply lines 13, 14 comprise stainless steel tubing, which are directly welded or hard-soldered to the injector body 10, thus improving the reliability of pressure and gas supply and providing a compact structure of the injector body 10. Furthermore, the hydraulic and gas supply lines 13, 14 have sufficient flexibility for tolerating the adjustment and rotation movements of the injector nozzle device 100. A hydration unit (not shown) can be inserted into the gas supply line 14. Advantageously, this allows to saturate the gas with water or other liquids.

The goniometer head 60, the pressurisation system 70 and the sheath gas supply 80 are connected with the control device 230 (including computer and microprocessor circuits) for monitoring and/or control purposes. In particular, the control device 230 is adapted for receiving current operation conditions of the components 60, 70 and 80 and/or providing control signals e.g. for controlling the goniometer head, the rotation of the injector nozzle device 100, and the creation and maintenance of the hydraulic and sheath gas pressures.

Furthermore, the injector nozzle device 100 includes a shielding device 90 with a shroud tube 91 (see Figure 2, not shown in Figure 1) and a receiver tube 92. The shroud tube 91 is optionally arranged for covering the injector body 10. The receiver tube 92 is arranged for catching the sample after passing through the X-ray beam 2 of the synchrotron source device 210. Additionally a collection reservoir (not shown) may be connected with the receiver tube 92. Tubes 91, 92 can be connected as an integral component. They can be made e.g. of plastic or metal. The receiver tube 92 has an inner diameter of e. g. 23 mm, and it is arranged offset slightly downwards below the scattering plane, to capture injector efflux and thereby avoid depositing sample or LCP onto the beam line optics, collimators, beam stop, and their drive mechanisms.

The detector device 220 comprises a semiconductor-based detector 221, like e.g. a CCD detector or a pixel detector. Additionally, an optical monitoring device 222 (e. g. a beam line microscope camera) can be provided for imaging the interaction area 3, where the sample stream 1 intersects the X-ray beam 2. Alternatively, a high-speed camera, like e.g. the camera FASTCAM SA-Z (manufacturer Photron, Japan), can be employed with appropriate magnifying lenses to record movies of the interaction area 3, e. g. at up to 2.1 Mfps. Both, the semiconductor-based detector 221 and the optional optical monitoring device 222 are connected with the control device 230 for monitoring, controlling and/or data collection purposes. Diffraction images collected with the semiconductor-based detector 221, as shown e.g. in Figure 5, are processed by the control device 230.

Figure 2 illustrates further details of the mutual arrangement of the injector nozzle device 100 and the beam line section 211. At the end of the nozzle capillary 20, the diameter of the combined shroud and receiver tubes 91, 92 is reduced, so that the distance between the exit window of the beam line sections 211 and the interaction area 3 can be minimized. Furthermore, the shroud and receiver tubes 91, 92 comprise a diffraction beam exit opening 93, which opens the interaction area 3 towards the detector device 220 (see Figure 1).

With a practical example, the invention has been tested for a high-throughput collection of X-ray diffraction image data, e. g. in air at 1 atm, as microscopic macromolecular crystals are passed at room temperature through an unattended third generation synchrotron X-ray beam. Diffraction images from serial X-ray exposures of 100 ms duration were recorded at ten per second (still images) or one per second (rotation images) from micron-sized lysozyme crystals embedded in a 35 µm diameter fluid free-stream of lipidic cubic phase (LCP), flowing at 500 µm/s orthogonally through a 10 x 30 µm X-ray spot (flux: 2 x 10¹¹ photons/s in 10 x 10 µm²) of the Swiss Light Source (SLS) synchrotron source device 210. At constant sample flow under these conditions, each X-ray exposure probed a pristine volume of sample. For rotation-data acquisition, the sample stream 1 was rotated 0.2° about its axis during each exposure. The diffraction patterns showed diffraction to high angles and the integrated diffraction intensities compared well with conventionally acquired data (see Figure 5). Background X-ray scattering from the carrier medium caused no problems.

Figures 3 and 4 show the injector nozzle device 100 with cross-sectional and side views, resp.. The injector nozzle device 100 has a compact design, wherein all components, i.e. the reservoir bore 20, the nozzle capillary 30, the hydraulic pressure drive 40 and a sheath gas flow channel 50 are included in or are attached to the injector body 10. With practical examples, the injector body 10 has a diameter below 2 cm and a longitudinal length below 12 cm. The complete injector body 10 consists of three body sections 10.1, 10.2 and 10.3 and a nozzle assembly insert 10.4, which are connected via threaded connections.

The first body section 10.1 (piston section) includes the primary plunger 41 in fluid communication with the pressurization system 70 (see Figure 1). Hydraulic pressure is supplied via the hydraulic supply line 13 which is directly fixed to the first body section 10.1. The first body section 10.1 including the primary plunger 41 is adapted for a direct coupling with the goniometer head 60.

The second body section 10.2 (sample reservoir section) includes the secondary plunger (piston rod) 42 with a filler plug 43 and the reservoir bore 20. The reservoir bore 20 is in direct fluidic communication with the secondary plunger 42. The filler plug 43 comprises two plastic balls made of PTFE. The hydraulic pressure is transferred via a piston rod 42 of the first plunger 41 to the filler plug 43. The piston rod 42 is mounted to the plunger 41 by differential thermal contraction. The filler plug 43 is press fit into the reservoir bore 20. The second body section 10.2 of the injector body 10 further includes a side fill-port 12 for supplying the viscous liquid with the microcrystals to the reservoir bore 20. The side fill-port 12 is closed with a pressure tight screw. Alternatively, the side fill-port can be omitted. The viscous liquid with the microcrystals can be loaded to the reservoir bore 20 through the third body section 10.3 while removing the nozzle assembly insert 10.4.

The piston rod 42 is a tight-tolerance precision ground rod of hardened steel, in particular a drill blank. With an inner diameter of the first plunger 41 of e. g. 8.00 mm and a diameter of the second plunger 43 of e. g. 1.37 mm, a pressure amplification from about 6.9 MPa (1000 psi) in the hydraulic supply line 13 to about 235 MPa (34100 psi) in the reservoir bore 20 is obtained.

The third body section 10.3 (front end cap) and the nozzle assembly insert 10.4 at the distal end of the injector body 10 include the nozzle capillary 30 and the sheath gas flow channel 50 coaxially surrounding the nozzle capillary 30. The nozzle capillary 30 is made of e. g. silica. A proximal end 31 of the nozzle capillary 30 opens to the reservoir bore 20, while a distal end 32 of the nozzle capillary 30 protrudes out of the injector body 10. The sheath gas flow channel 50 between an inner surface of the third body section 10.3 and the nozzle capillary 30 guides a sheath gas flow towards the distal end 32 of the nozzle capillary 30, thus surrounding and mechanically stabilizing the sample stream 1 extruded from the nozzle capillary 30.

The first and second body sections 10.1, 10.2 include a gas supply cavity 11 carrying the sheath gas to the sheath gas flow channel 50. Integration of the gas supply cavity 11 contributes to the compact structure of the injector nozzle device 100. The gas supply line 14 is directly welded or hard-soldered in communication with the gas supply cavity 11 to the injector body 10.

The third body section 10.3 holds the sheath gas flow channel 50 providing an outer envelope through which gas flows out coaxially along the extruding stream 1. An important advantage is obtained by the attachment of the third body section 10.3 with a sliding O-ring seal. This allows the position of the gas aperture of the sheath gas flow channel 50 to be adjusted relative to the tip of the inner capillary after the device is fully assembled and even during operation. This adjustment feature makes it much easier to attain a reliable and stable extrusion.

Advantageously, the body section 10.1, 10.2 and 10.3 can be dissembled by unscrewing to provide access to the piston, to the capillary, and for loading the sample reservoir. Preferably, the connections are sealed by knife-edges that bite into a gasket disk cut from an O-ring (e. g. PTFE or Viton (commercial name) or copper). Recessed annular cavities adjacent to the O-ring, combined with holes drilled through the gasket, eliminate the need for azimuthal alignment upon screwing these joints together.

Figure 5 schematically shows the exposed end of the sheath gas flow channel 50, through which the distal end 32 (coned tip of the capillary) of the nozzle capillary 30 protrudes. With this embodiment, the sheath gas flow channel 50 has an inner square shape. The end of the sheath gas flow channel 50 is ground and flame burnished to yield a semi-square aperture at the capillary tip. This sleeve is mounted concentrically around the nozzle capillary 30 and carefully positioned such that the conical surface of the capillary comes into contact with the inside flats of the sleeve aperture of the sheath gas flow channel 50. This leaves the capillary tip centred in the semi-square aperture and protruding about e. g. 0.5 to 1 mm beyond it. This geometry positions and centres the capillary tip in the sleeve aperture and also allows gas to flow out through the open corners, preventing curling up of the emerging high viscosity free-stream. According to an alternative embodiment, the sheath gas flow channel has an inner circular shape. In this case, additional centring structures can be provided in the sheath gas flow channel for holding the nozzle capillary.

Alternatively, the tip of the nozzle capillary can be formed with converging polygonal facets like, e.g. triangular, square or pentagonal cross-section, by use of stepped rather than continuous rotation of the capillary during the grinding of the capillary tip. In particular if the end of the sheath gas flow channel 50 has a smooth circular inner bore, the corners of these facets then are placed during assembly into contact with the inner bore of the gas sheath to self-center the capillary tip in the gas flow channel while providing ample symmetric gas flow along the facets. It has been fabricated and demonstrated a stepping-motor controlled device for carrying out the grinding of such faceted capillary tips.

Furthermore, Figure 5 illustrates that in contrast to low viscosity gas-focused free streams, the high viscosity extrusion sample stream 1 is not reduced in diameter by the coaxial gas flow. The diameter of the sample stream 1 equals the inner diameter of the nozzle capillary 30. Nonetheless, the gas flow maintains a straight-line form of the extruded sample stream 1. The gas flow exerts shear force on the free-stream, resulting in a net axial gas dynamic force on the emerging stream that increases with the length of the extruded segment, until eventually some or all of the extruded segment breaks away and flies off downstream (downstream of interaction area 3). Flow conditions can often be found under which this rupture occurs several millimetre downstream of the nozzle, allowing a steady, uniform, linear extrusion to be maintained in the region where the X-ray beam intersects the stream, immediately downstream of the nozzle tip as seen in Figure 1.

Figure 6 illustrates an alternative X-ray crystallography apparatus 200 with the injector nozzle device 100 the beam line section 211 of a synchrotron source device. With this apparatus, the injector nozzle device 100 is oriented vertically, so that the axial direction thereof is parallel to the direction of gravity (see arrow g). Figure 6 is a partial view of the X-ray crystallography apparatus 200. The beam line section 211 is schematically shown with a dashed line. The directions of the sample stream 1 (z-direction) and the X-ray (direction perpendicular to the drawing plane) span a vertical plane. Further components can be implemented as shown in Figure 1.

According to Figure 6, the injector nozzle device 100 is fixedly connected via a carrier 62, 63 with the goniometer head 60. The carrier 62, 63 is provided with an x-y-adjustment table 64 (type e. g. OWISS KT-40) and a z-adjustment screw 65. Advantageously, this improves a solid and heavy duty attachment, while still incorporating the two degrees of transverse adjustment (e. g. manual) for placing the extruding sample stream 1 exactly on the axis of the goniometer spindle. This adjustment is provided for collecting of "rotation diffraction images" in which the extruding sample stream 1 is rotated about its axis (corresponding to the goniometer spindle axis) during the X-ray exposure.

The upper portion of the carrier 62, 63 comprises a bracket 63 which is adapted for rapid mount/dismount of the injector body 10. The injector body 10 has a slotting (not shown) that slides into a corresponding U-shaped cut-out in the bracket 63. Spring-loaded set-screw plungers in the injector body 10 remove mechanical play while still allowing the injector body 10 to slide easily into place. Knurled thumb screws the lock the injector into position. This allows the injector body 10 to be rapidly removed and replaced, while nonetheless repeatedly locking into the same position (to well under 100 microns). Advantageously, multiple injector bodies can be provided, leaving sole free for loading while the one is in operation.

The injector body 10 may be provided with a temperature control device 70, in particular a cooling and/or heating device. The temperature control device 70 (schematically shown in Figure 6) is arranged having thermal contact with the injector body 10, e. g. for cooling the injector body 10. This cooling or heating not only allows the sample to be maintained at a constant temperature (typically ca. room temperature), but also can be used to provide an additional level of control over the extrusion via adjustment of the sample viscosity via temperature-dependent changes in viscosity. The temperature control device 70 may comprise e. g. a resistance heater and/or a Peltier cooling element.

Figures 7A and 7B show an indexable SLS synchrotron snapshot diffraction pattern, recorded of a lysozyme microcrystal carried in LCP extruded at 500 µm/s from the injector nozzle device 100 in experimental arrangement of Figure 1. Figure 5B is an enlarged view showing diffraction spots well beyond the water ring. The diffraction spots of Figure 7 are sharp and distinct, indicating no spurious sample rotation during the exposure, either of the crystal with respect to the sample stream 1 or of the sample stream 1 with respect to the X-ray beam 2.

The features of the invention disclosed in the above description, the drawings and the claims can be of significance both individually as well as in combination for the realization of the invention in its various embodiments.

## Claims

1. Method of X-ray crystallography for investigating microscopic crystals, in particular microscopic crystals of biological macromolecules, comprising the steps of:
- extruding a sample stream (1) with an injector nozzle device (100), wherein the sample stream (1) comprises a viscous liquid with microscopic crystals embedded therein,
- providing an X-ray beam (2) and irradiating the sample stream (1) with the X-ray beam (2), and
- collecting diffraction image data created by diffraction of the X-ray beam (2) by the microscopic crystals with a series of X-ray exposures of the sample stream (1),
**characterized in that**
- the X-ray beam (2) is provided with a synchrotron source device (210),
- the sample stream (1) and the X-ray beam (2) intersect each other at right angles, and
- the sample stream (1) is rotated about the axis of the sample stream (1) during each X-ray exposure.

2. Method according to claim 1, wherein the step of irradiating the sample stream (1) includes at least one of the features
- the step of irradiating the sample stream (1) is conducted at atmospheric normal pressure,
- the step of irradiating the sample stream (1) is conducted at ambient temperature,
- the step of irradiating the sample stream (1) is conducted in ambient air or an inert gas, in particular helium, and
- the step of irradiating the sample stream (1) is conducted in a controlled environment to avoid solvent loss from the sample stream (1), in particular with humidity control to avoid dehydration of the sample stream.

3. Method according to one of the foregoing claims, wherein the sample stream (1) has at least one of the features:
- the sample stream (1) flows smoothly and continuously as a contiguous linear free-stream over a distance of no less than 100 µm downstream of the injector nozzle device (100) and with a diameter of no more than 50 µm,
- the velocity of the sample stream (1) is such that a transit time of the microscopic crystals through the X-ray beam (2) is at least 1 ms, in particular at least 10 ms, and/or at most 10 s, in particular at most 1 s,
- the viscosity of the sample stream (1) is selected such that the sample stream (1) extrudes as a semi-solid free-stream with shape stability from the injector nozzle device (100),
- the concentration of the microcrystals in the sample stream (1) is such that there is on average no more than one single microcrystal within the X-ray beam at any time, and
- the viscous liquid comprises a lipidic cubic phase (LCP).

4. Method according to one of the foregoing claims, wherein the microcrystals have at least one of the features:
- the microcrystals comprise biological macromolecules including at least one of soluble proteins, insoluble proteins, soluble protein complexes, and insoluble protein complexes,
- the longest transverse spatial extent of the microcrystals once embedded in and moving with the extruded free-stream, is sufficiently less than the diameter of the extruded free-stream, and
- the microcrystals are maintained in a fully solvated condition within the sample stream (1) throughout the X-ray irradiation.

5. Method according to one of the foregoing claims, including at least one of the features
- synchrotron source device (210) comprises a synchrotron ring source or an energy-recovering LINAC source,
- the X-ray beam (2) is either a monochromatic or pink X-ray beam,
- the X-ray beam (2) comprises X-ray pulses having a repetition rate such that each X-ray pulse probes a pristine volume of sample that has not been altered by preceding X-ray pulses,
- the X-ray beam (2) comprises continuous X-ray radiation
- the X-ray exposures have a duration determined by the X-ray pulse length (bunch length), an X-ray shutter or detector gating,
- the X-ray exposures have a duration that is longer than 100 ps, in particular longer than 10 ms, and
- the X-ray exposures have a duration selected such that the absorbed dose is below radiation damage conditions.

6. Method according to one of the foregoing claims,
wherein the rotating step has at least one of the features:
- the sample stream (1) is rotated by rotating the injector nozzle device (100), and
- the sample stream (1) is rotated at least 0.05° but no more than 1° during each X-ray exposure.

## Patentansprüche

1. Verfahren der Röntgenkristallografie zur Untersuchung mikroskopischer Kristalle, insbesondere mikroskopischer Kristalle von biologischen Makromolekülen, umfassend die Schritte:
- Extrudieren eines Probenstroms (1) mit einer Injektordüseneinrichtung (100), wobei der Probenstrom (1) eine viskose Flüssigkeit mit darin eingebetteten mikroskopischen Kristallen umfasst,
- Bereitstellen eines Röntgenstrahls (2) und Bestrahlen des Probenstroms (1) mit dem Röntgenstrahl (2), und
- Aufnehmen von Beugungsbilddaten, die durch Beugung des Röntgenstrahls (2) durch die mikroskopischen Kristalle mit einer Reihe von Röntgenexpositionen des Probenstroms (1) erzeugt werden,
**dadurch gekennzeichnet, dass**
- der Röntgenstrahl (2) mit einer Synchrotronquelleneinrichtung (210) bereitgestellt wird,
- der Probenstrom (1) und der Röntgenstrahl (2) sich unter rechten Winkeln schneiden, und
- der Probenstrom (1) bei jeder Röntgenexposition um die Achse des Probenstroms (1) gedreht wird.

2. Verfahren gemäß Anspruch 1, wobei der Schritt des Bestrahlens des Probenstroms (1) mindestens eines der Merkmale beinhaltet:
- der Schritt des Bestrahlens des Probenstroms (1) wird bei atmosphärischem Normaldruck durchgeführt,
- der Schritt des Bestrahlens des Probenstroms (1) wird bei Umgebungstemperatur durchgeführt,
- der Schritt der Bestrahlung des Probenstroms (1) wird in Umgebungsluft oder einem Inertgas, insbesondere Helium, durchgeführt, und
- der Schritt des Bestrahlens des Probenstroms (1) wird in einer kontrollierten Umgebung durchgeführt, um einen Lösungsmittelverlust aus dem Probenstrom (1) zu vermeiden, insbesondere mit Feuchtigkeitskontrolle, um eine Austrocknung des Probenstroms zu vermeiden.

3. Verfahren gemäß einem der vorhergehenden Ansprüche, wobei der Probenstrom (1) mindestens eine der Eigenschaften aufweist:
- der Probenstrom (1) fließt gleichmäßig und kontinuierlich als ein zusammenhängender linearer Freistrahl über einen Abstand von nicht weniger als 100 µm stromabwärts der Injektordüseneinrichtung (100) und mit einem Durchmesser von nicht mehr als 50 µm,
- die Geschwindigkeit des Probenstroms (1) ist derart, dass eine Laufzeit der mikroskopischen Kristalle durch den Röntgenstrahl (2) mindestens 1 ms, insbesondere mindestens 10 ms, und/oder höchstens 10 s, insbesondere höchstens 1 s beträgt,
- die Viskosität des Probenstroms (1) ist derart gewählt, dass der Probenstrom (1) als halbfester Freistrahl mit einer Formstabilität aus der Injektordüseneinrichtung (100) extrudiert wird,
- die Konzentration der Mikrokristalle im Probenstrom (1) ist derart, dass sich im Durchschnitt jederzeit nicht mehr als ein einziger Mikrokristall im Röntgenstrahl befindet, und
- die viskose Flüssigkeit umfasst eine lipidische kubische Phase (LCP).

4. Verfahren gemäß einem der vorhergehenden Ansprüche, wobei die Mikrokristalle mindestens eine der Eigenschaften aufweisen:
- die Mikrokristalle umfassen biologische Makromoleküle, einschließlich mindestens eines von löslichen Proteinen, unlöslichen Proteinen, löslichen Proteinkomplexen und unlöslichen Proteinkomplexen,
- die längste transversale räumliche Ausdehnung der Mikrokristale, wenn sie in den extrudierten Freistrahl eingebettet und mit diesem bewegt werden, ist ausreichend kleiner als der Durchmesser des extrudierten Freistrahls, und
- die Mikrokristalle werden während der gesamten Röntgenbestrahlung in einem vollständig solvatisierten Zustand innerhalb des Probenstroms (1) gehalten.

5. Verfahren gemäß einem der vorhergehenden Ansprüche, enthaltend mindestens eines der Merkmale
- die Synchrotronquelleneinrichtung (210) umfasst eine Synchrotronringquelle oder eine energierückgewinnende LINAC-Quelle,
- der Röntgenstrahl (2) ist entweder ein monochromatischer oder ein polychromatischer Röntgenstrahl,
- der Röntgenstrahl (2) umfasst Röntgenimpulse mit einer Wiederholungsrate, so dass jeder Röntgenimpuls ein unverfälschtes Probenvolumen untersucht, das nicht durch vorhergehende Röntgenimpulse verändert wurde,
- der Röntgenstrahl (2) umfasst eine kontinuierliche Röntgenstrahlung,
- die Röntgenexpositionen weisen eine Dauer auf, die durch die Röntgenpulsdauer (Bündellänge), einen Röntgen-Shutter oder ein Detektor-Gate bestimmt wird,
- die Röntgenexpositionen weisen eine Dauer auf, die länger als 100 ps, insbesondere länger als 10 ms ist, und
- die Röntgenexpositionen weisen eine Dauer auf, die so gewählt ist, dass die absorbierte Dosis unter den Bedingungen für Strahlenschäden liegt.

6. Verfahren gemäß einem der vorhergehenden Ansprüche, wobei der Schritt des Drehens mindestens eine der Eigenschaften aufweist:
- der Probenstrom (1) wird durch Drehen der Injektordüseneinrichtung (100) gedreht, und
- der Probenstrom (1) wird bei jeder Röntgenexposition um mindestens 0,05°, aber nicht mehr als 1° gedreht.

## Revendications

1. Procédé de cristallographie aux rayons X destiné à étudier des cristaux microscopiques, en particulier des cristaux microscopiques de macromolécules biologiques, comprenant les étapes de :
- extrusion d'un flux d'échantillon (1) avec un dispositif de buse d'injection (100), dans lequel le flux d'échantillon (1) comprend un liquide visqueux avec des cristaux microscopiques noyés à l'intérieur,
- la fourniture d'un faisceau de rayons X (2) et l'irradiation du flux d'échantillon (1) avec le faisceau de rayons X (2), et
- la collecte de données d'image de diffraction créées par diffraction du faisceau de rayons X (2) par les cristaux microscopiques avec une série d'expositions aux rayons X du flux d'échantillon (1),
**caractérisé en ce que**
- le faisceau de rayons X (2) est pourvu d'un dispositif source de synchrotron (210),
- le flux d'échantillon (1) et le faisceau de rayons X (2) se coupent à angles droits, et
- le flux d'échantillon (1) est tourné autour de l'axe du flux d'échantillon (1) pendant chaque exposition aux rayons X.

2. Procédé selon la revendication 1, dans lequel l'étape d'irradiation du flux d'échantillon (1) inclut au moins l'une des particularités
- l'étape d'irradiation du flux d'échantillon (1) est conduite à pression normale atmosphérique,
- l'étape d'irradiation du flux d'échantillon (1) est conduite à température ambiante,
- l'étape d'irradiation du flux d'échantillon (1) est conduite dans de l'air ambiant ou un gaz inerte, en particulier de l'hélium, et
- l'étape d'irradiation du flux d'échantillon (1) est conduite dans un environnement régulé pour éviter une perte de solvant du flux d'échantillon (1), en particulier avec une régulation d'humidité pour éviter une déshydratation du flux d'échantillon.

3. Procédé selon l'une des revendications précédentes, dans lequel le flux d'échantillon (1) a au moins l'une des particularités :
- le flux d'échantillon (1) s'écoule sans à-coup et continuellement comme un flux libre linéaire contigu sur une distance de pas moins de 100 µm en aval du dispositif de buse d'injection (100) et avec un diamètre de pas plus de 50 µm,
- la vitesse du flux d'échantillon (1) est telle qu'un temps de transit des cristaux microscopiques à travers un faisceau de rayons X (2) est d'au moins 1 ms, en particulier d'au moins 10 ms, et/ou au plus de 10 s, en particulier au plus de 1 s,
- la viscosité du flux d'échantillon (1) est choisie de telle sorte que le flux d'échantillon (1) s'extrude comme un flux libre semi-solide avec une stabilité de forme depuis le dispositif de buse d'injection (100),
- la concentration des microcristaux dans le flux d'échantillon (1) est telle qu'il y a en moyenne pas plus d'un microcristal unique au sein du faisceau de rayons X à tout instant, et
- le liquide visqueux comprend une phase cubique lipidique (PCL).

4. Procédé selon l'une des revendications précédentes, dans lequel les microcristaux ont au moins l'une des particularités :
- les microcristaux comprennent des macromolécules biologiques incluant au moins l'une parmi des protéines solubles, des protéines insolubles, des complexes de protéines solubles, et des complexes de protéines insolubles,
- la plus longue étendue spatiale transversale des microcristaux une fois noyés dans et en déplacement avec le flux libre extrudé, est suffisamment inférieure au diamètre du flux libre extrudé, et
- les microcristaux sont maintenus dans un état totalement solvaté au sein du flux d'échantillon (1) tout au long de l'irradiation aux rayons X.

5. Procédé selon l'une des revendications précédentes, incluant au moins l'une des particularités
- le dispositif source de synchrotron (210) comprend une source d'anneau de synchrotron ou une source d'accélérateur linéaire à récupération d'énergie,
- le faisceau de rayons X (2) est un faisceau de rayons X soit monochromatique soit rose,
- le faisceau de rayons X (2) comprend des impulsions de rayons X ayant un taux de répétition tel que chaque impulsion de rayons X sonde un volume vierge d'échantillon qui n'a pas été modifié par des impulsions de rayons X précédentes,
- le faisceau de rayons X (2) comprend un rayonnement de rayons X continu,
- les expositions aux rayons X ont une durée déterminée par la longueur d'impulsion de rayons X (longueur de paquet), un obturateur de rayons X, ou une synchronisation de détecteur,
- les expositions aux rayons X ont une durée qui est plus longue que 100 ps, en particulier plus longue que 10 ms, et
- les expositions aux rayons X ont une durée choisie pour que la dose absorbée soit en dessous de conditions d'endommagement par rayonnement.

6. Procédé selon l'une des revendications précédentes, dans lequel l'étape de rotation présente au moins l'une des particularités :
- le flux d'échantillon (1) est tourné en faisant tourner le dispositif de buse d'injection (100), et
- le flux d'échantillon (1) est tourné d'au moins 0,05° mais de pas plus de 1° pendant chaque exposition aux rayons X.
